# EUROPEAN PATENT SPECIFICATION

(11) **EP 1 933 675 B1**
(45) Date of publication and mention of the grant of the patent: **21.11.2012**
(21) Application number: 06790473.0
(22) Date of filing: 15.09.2006
(51) Int. Cl.: A47F 9/04

(54) **SELF-SERVICE CHECKOUT SYSTEM**
SELBSTBEDIENUNGSKASSENSYSTEM
SYSTÈME DE CAISSES DE SORTIE EN LIBRE-SERVICE

(30) Priority: 15.09.2005 BR PI0503697
(43) Date of publication of application: 25.06.2008
(73) Proprietor: ITAUTEC S.A. - GRUPO ITAUTEC, 01310-927 São Paulo SP (BR)
(72) Inventor: DE FARIA, Marco, Antonio, Scarmeloto, 05409-000 São Paulo - SP (BR)
(74) Representative: Röthinger, Rainer
(86) International application number: PCT/BR2006/000187
(87) International publication number: WO 2007/030905

(56) References cited:
- WO-A2-2004/008402
- US-A- 4 676 343
- US-A- 6 112 857
- US-A1- 2004 069 848

## Description

### Field of the invention

The present invention refers to self-service sales counters used in commercial establishments that allow the customers themselves to check out their purchases and make the corresponding payment without requiring the intervention of an attendant, being particularly adequate to be used in supermarkets, convenience stores and similar establishments.

### Description of the prior art

In order to cut labor costs or simply to adopt new technologies to accommodate the requirements of increasing customer demands, several supermarkets, convenience stores and similar establishments have opted to use point-of-sale counters wherein the customers themselves check out their purchases, are informed of the amount to be paid for said purchases, and pay the same without requiring the presence of any employee of the establishment. Such point-of-sale apparatuses are commonly known as self-checkout counters.

The self-checkout counters commonly known in the art comprise various devices such as label readers (bar codes, RFID, and so on), weighing means, a video monitor, discharge (check-in) and packaging zones or platforms, a receipt or ticket printer and light signaling means.

An example of this type of equipment is shown in US patent 4,676,343, wherein a counter is provided at a first end with a bar code scanner which identifies each item placed before it by the customer, who subsequently places the item on a conveyor belt that carries the item to a packaging counter or station. Said conveyor belt runs through a tunnel whereto the customer has no access, wherein there is installed a set of scales for checking whether the weight of the merchandise corresponds to the identification provided by the label. Upon receiving a signal, provided by the customer, indicating that all items have been identified, the system drives the printer to issue the corresponding sales ticket to be taken by the customer along with the merchandise to a cashier station whereby the payment will be made and a receipt will be issued for the transaction.

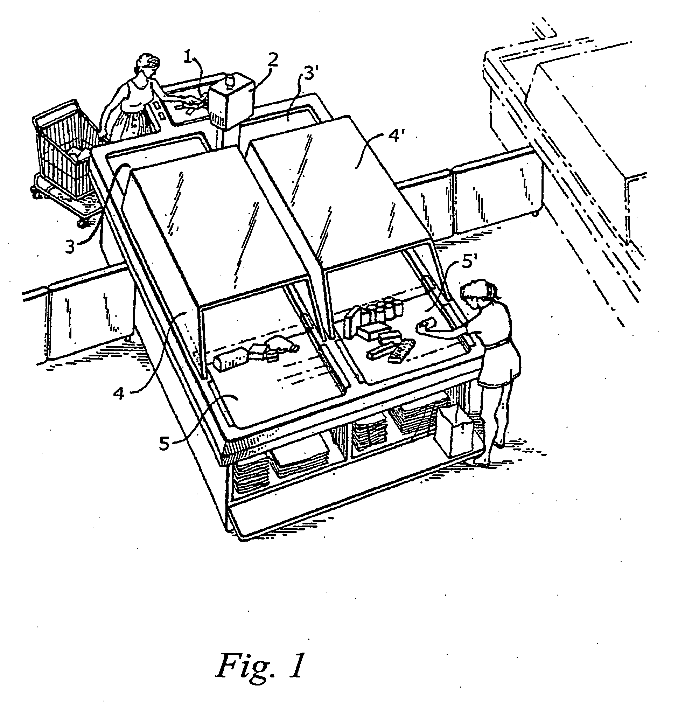

In a second embodiment of said invention, there are provided two self-checkout counters placed in parallel, allowing a more effective use of the reading equipment. As shown in Fig. 1, which reproduces Fig. 5 of the abovementioned document, the label reader 1 and the monitor 2 are shared by both stations, and the already identified merchandise is placed on the initial section 3, 3' of the conveyor belts that carries the merchandise through the tunnels 4, 4', wherein the merchandise is weighed, to the packaging platforms 5, 5'. In addition to requiring a cashier to collect payments, the arrangement described in the said patent involves the additional disadvantage of lack of privacy, as well as the possibility that a customer might unduly avail himself or herself of the merchandise of another client, since the areas occupied by both stations are contiguous throughout their length, including the packaging platforms.

An arrangement that differs from the one described above - allowing, as an option, the payment without intervention of an employee of the establishment - is described in US patent application 2004/0069848, which discloses two self-checkout counters placed in a non-parallel arrangement, and wherein such stations may be operated both in manned and automatic modes. According to this document, when all the purchased items have been passed through the identification devices, the customer signals such conclusion and indicates his or her preferred payment option (credit card, cash, and so forth). Since the apparatus is shared by the two counters, the system serves for this transaction the station whose customer has first signaled said conclusion. When this first transaction has been finished, the payment device may be used by the remaining customer. However, this system does not provide privacy to its users, since the packaging areas are adjacent to one another. Furthermore, there is a possibility of delay in serving one of the customers, and such delay may be significant in cases where the customer having priority for use of the equipment is not familiarized therewith. In addition, the proposed arrangement, besides taking a considerable amount of space in the establishment hinders the flow of customers between the area of the merchandise stands and the self-checkout area.

The object of Brazilian patent application PI 0405598 attempts to remedy this shortcoming by providing a set of cash receiving and dispensing means for each of the stations, that are further provided with individual card readers. Although possessing some benefits in relation to the prior art, the arrangement proposed in said application is liable to fraudulent actions of customers, who might abstain from submitting one or more items for weighing by the bioptical scanning scales. Furthermore, the proposed self-checkout counter does not warrant the privacy of the users at the merchandise discharge zone.

### Objects of the invention

Considering the above, a first object of the present invention is to provide a constructive arrangement allowing a significant economy of the available floor space at the point of sale, thus improving the flow of people and merchandise inside the establishment.

A second object consists in providing a constructive arrangement allowing its users a degree of privacy.

A third object is to provide an automatic self-checkout counter system that allows fast processing of the transactions conducted by the customers.

A fourth object consists in providing an automatic self-checkout counter system able to reduce the possibility of fraudulent use by the customers.

A fifth object is to provide an automatic self-checkout counter system that signals any irregular operation of the equipment.

### Brief description of the invention

The above and other objects are achieved by the invention by a system comprising a point-of-sale arrangement including a first and a second self-checkout stations, arranged in parallel and extending each one from a merchandise discharge (check-in) counter at one end of the station to a packaging zone at the opposite end thereof, said first and second checkout stations being separated by a partition running along the entire length of said arrangement (see independent claim 1).

The improved operational efficiency of the system is provided by grouping the devices that integrate the same in the form of functional modules comprising a first commercial automation module associated with the first checkout station, a second commercial automation module associated with the second checkout station, and a banking automation module shared by both said stations, wherein the control of each of said modules is performed by a specific independent program (see independent claim 1).

Preferably, each of the said specific programs resides in an independent data processing unit (CPU) (see dependent claim 12).

Preferably, the three specific programs are resident in one same data processing unit.

Preferably, both said checkout stations share the same currency bills dispensing device, which is bidirectional, that is, includes a first outlet turned towards said first station and a second outlet turned towards said second station.

Preferably, the packaging zone of each station comprises a merchandise packaging counter or platform (see dependent claim 2).

Preferably, the discharge zone of each station comprises a merchandise discharge platform or counter.

Preferably, each said commercial automation module comprises a set of bioptical scanning scales, a hand-held barcode scanner, a touch-type screen display device, a printer to print receipts or tickets, a keypad, a card reader, and at least one loudspeaker.

Preferably, each said packaging platform or counter is provided with a set of confirmation weighing scales (see dependent claim 3).

Preferably, the banking automation module comprises two sets of devices, each set associated to one of said self-checkout stations, each set comprising a coin recycling device (see dependent claim 8) associated to the respective coin inlet and outlet slots and a currency bill validation device with a respective storage magazine associated to a currency bill inlet arrangement (see dependent claim 11).

Preferably, the banking automation module comprises a single bidirectional coin dispenser, that is, having a first slot turned towards said first station and a second slot turned towards said second station.

Preferably, each said set of banking automation devices comprises an independent coin collection device.

According to another feature of the invention, said partition extends up to the outer edges of said discharge and packaging platforms or counters.

Preferably, the keypad is associated with means to scan the customer's signature (see dependent claim 13).

Developments are set out in dependent claims 4 to 7, 9 and 10.

According to another feature of the invention, there is provided a control method according to claim 14.

Developments are set out in dependent claims 15 to 23.

### Description of the figures

Other features, limitations and advantages of the invention will be better understood by means of a description of an exemplary non-limiting embodiment of the invention and the figures associated thereto, wherein:
Figure 1 is a view of a known point-of-sale counter, as described in US patent 4,676,343.
Figure 2 is a perspective view of a point-of sale counter comprising two self-service checkout stations, according to the present invention.
Figure 3 is a schematic illustration showing the interconnections between the various devices that integrate the said self-service checkout stations with the CPU's, according to a first embodiment of the present invention.
Figure 4 is an exemplary flow diagram of the method for transactions in a self-service checkout station, according to the present invention.

### Detailed description of the invention

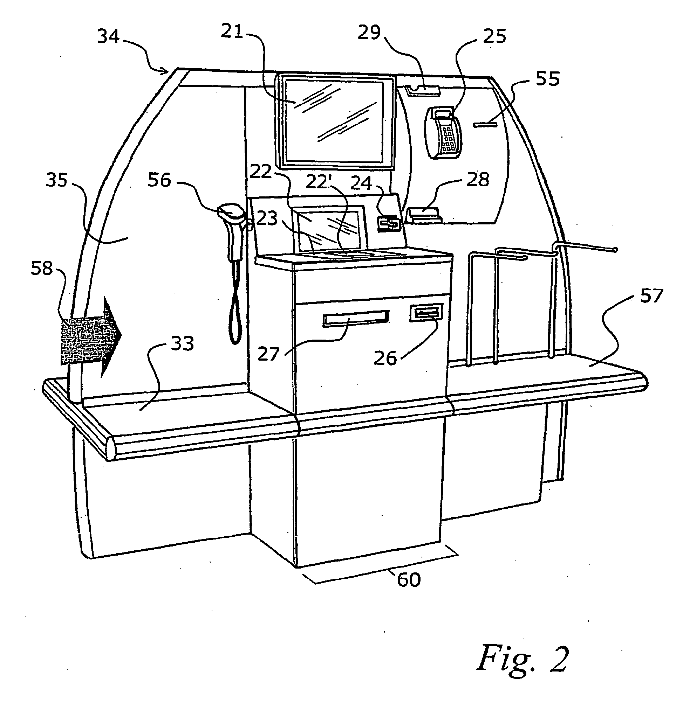

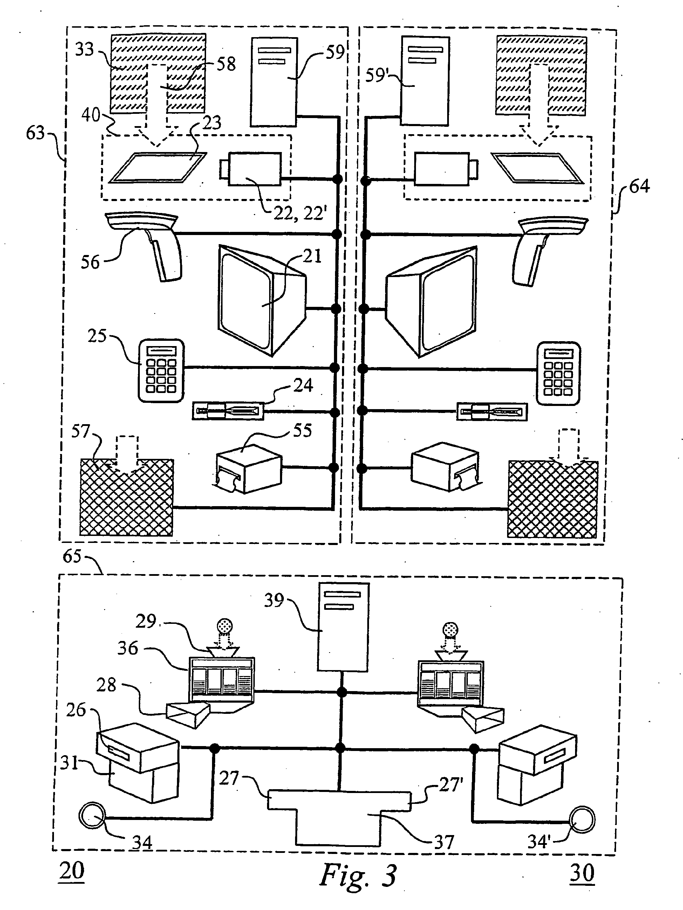

Referring to Figures 2 and 3, the proposed system comprises a point-of-sale counter consisting of a cabinet including a first self-service checkout station 20 and a second similar station 30 (not visible in Fig. 2), placed substantially in parallel along the opposite faces of a partition 61, which provides the physical support to several banking or commercial automation devices, such as the hand-held barcode scanner 56, the video display monitor 21, the coin collection device 29, the coin dispensing slot 28, the keypad 25 and the printer 55. The merchandise handling direction is from the discharge platform or counter 33 towards the packaging platform or counter 57, as indicated by arrow 58.

Continuing to refer to Fig. 2, the middle portion of each station is provided with a console 60 whose upper part is occupied by the set of bioptical scanning scales 22, 22', 23 and by the card reader 24, and whose front face is provided with the slots for currency bill collection 26 and currency bill dispensing 27. Inside this console, which extends down to the floor, there are installed the devices associated to currency bill processing, the authenticity checking device and the storage magazine 31 for the currency bills received and the bidirectional dispenser 37. Said console further contains a no-break power supply unit as well as the CPU's.

In further detail each station comprises:
- a set of bioptical scanning scales 40 (not referenced in Fig. 2) formed by the weighing platform 23 and the bidirectional bar code scanning device associated with the windows 22 and 22' which correspond respectively to the vertical and horizontal scanning zones. In cases of bulky merchandise items that do not fit the scales, the respective bar code may be scanned with the hand-held barcode scanner 56;
- a PIN PAD keypad 25 that may be used to enter data such as, for example, the user's password. In an alternative embodiment, there may be associated to said keypad a means to scan the customer's signature, to be used with credit card operations;
- a card reader 24, said card being provided with a magnetic strip, am embedded chip, or RFID communication device;
- a printer 55, which in the present exemplary embodiment, consists of a thermal printer;
- a currency bill collection slot 26;
- at least one light signaling means 34 to summon an employee of the establishment, when so required;
- one or more loudspeakers (not shown) for reproduction of sound messages;
- a packaging platform or counter, positioned on the right side of the self-service checkout station in Figure 2, which in the instant exemplary embodiment is provided with a set of confirmation scales 57;
- a slot 27 for dispensing currency bills.

In addition to the above mentioned external elements, as may be seen in Fig. 2, the stations include several internal devices:
- a coin recycling means (reference 36 in Fig. 3) comprising, in addition to the means to confirm the authenticity of the coins inserted in slot 29, an apparatus to sort and store the coins in magazines according to their face value, making the same available to be returned as change by means of the dispensing slot 28, in cases when any change is due;
- a currency bill authentication means associated to the currency bill collection slot 26, whereby the face value and authenticity of the currency bills are checked, and an internal cassette 31 for storage of the paper currency for later retrieval by one of the establishment's employees;
- a bidirectional currency bill dispensing apparatus 37 (see Fig. 3) to return the change due when required, servicing the two stations by means of dispensing slots 27 e 27' oriented in opposite directions, that is, turned towards said first and second self-service checkout stations.

The arrangement used for processing coins may be different from the one used in the present exemplary embodiment. Thus, for example, each station may be provided with an independent coin authentication/collection device, and a dispenser shared by both stations, as occurs with the currency bills. In a third embodiment, one single recycling device shared by both stations authenticates the coins, stores the same, and when necessary, dispenses the same to both sides.

According to the exemplary embodiment shown in Fig. 3, the self-service checkout counter arrangement comprises the first commercial automation module 63 associated with the first station 20, the second commercial automation module 64 associated with the second station 30 and the banking automation module 65 providing service to both stations. The devices that comprise each module are connected to a CPU 59, 59' and 39, and in each of these resides the specific program used to control the respective module. It should be remarked that, notwithstanding the fact that there is provided an unified module for banking automation, in the embodiment depicted in Fig. 3 each self-checkout station 20, 30 is provided with an independent coin recycling device 36, such as also applies to the currency bill authentication means and respective storage cassettes. However, other embodiments may use a bidirectional coin dispenser shared by both stations, with or without recycling functionalities. Also as shown in said figure and in accordance with the invention, the banking automation module includes light indicator means 34, 34', preferably placed in said partition 35, as well as loudspeakers (not shown). These indicators may be activated by the user him- or herself, in order to request the presence of an establishment employee, or may be driven by the software resident in the system, when an irregularity is detected during the operation of the checkout station, as shall be explained further on.

In the present exemplary embodiment, the various function "keys" are displayed in the monitor screen 21 itself, which is of the touch-screen type. Among said keys are those that must be activated by the user in order to confirm that all items have been identified - either by passing through the set of bioptical scanning scales or by using the hand-held barcode scanner 56 - whereupon the collection routine is initiated. A second key may be pressed in case the user wishes to exclude one or more items of merchandise that have already been added to the total, and so forth. In alternative embodiments, said keys may be provided on the station's panel, in a specific area.

As shown in the figures 2 and 3 and according to the invention, the commercial automation module of each station comprises a set of scales 57, whereon are successively placed, prior to packaging, the items of merchandise already identified by the set of bioptical scanning scales 22. The purpose of this set of confirmation scales 57 is to compare the total weight of merchandise placed on its platform with the sum total of the weights of the items processed by said set of bioptical scanning scales, for the purpose of preventing customer fraud.

Additional embodiments of the point-of-sale facility may be provided with a presence sensing means to detect the arrival of a user at the self service checkout counter, and/or sensing means associated with the merchandise discharge platform or counter 33. Said sensor, upon detecting the existence of any merchandise, causes the process to be initiated, said detection being performed by known means, such as weight sensing, interruption of an infrared beam, ultrasonic sensing or radio frequency radiation or other equivalent means.

In order to allow the supervision of the various self-service checkout stations installed in a commercial establishment, the same are connected by data transmission links to a central control and supervision facility, not shown, where an operator may select which self-service checkout station is to be monitored. In addition, the system may include individual video cameras for each said station, either selected by the operator or providing automated selection and transmission of the image in case the alarm of a certain station is activated.

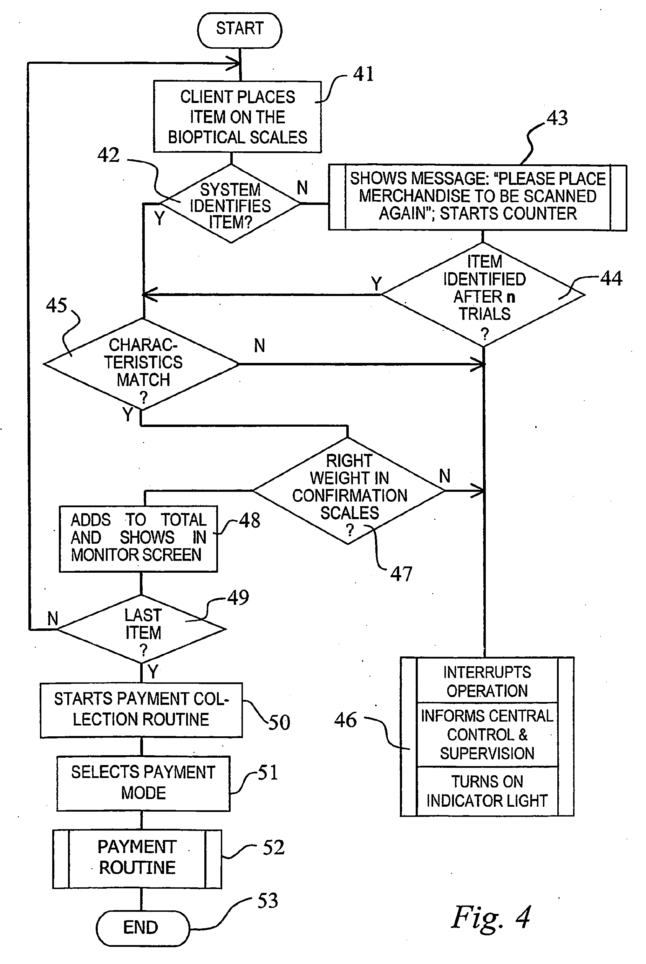

Fig. 4 is a simplified flow diagram of the operation of the self checkout counter, given as a non-limiting example. It is supposed that said station's operation is initiated either by the detection of the presence of merchandise on the discharge platform or counter 33, or by the user touching a certain icon displayed on the touch-screen, or by a default mode of the system. The user begins the merchandise identification procedure by placing the first item on the bioptical scanning scales, step 41 of the flow diagram, or in case of a bulky item of merchandise, by readout of the respective code using the hand-held barcode scanner 56. The system reads out the bar code irrespective of the orientation thereof, in order to identify the merchandise, step 42. If the identification fails, there will be called up a routine 43 that is initiated by the onscreen display of the following message: "Please place the merchandise to be scanned again" with the simultaneous activation of an identification attempts counter. If the identification is not successful after n trials, the processing is interrupted, step 46, the central control and supervision facility is informed of the fact and an indicator light 34 is turned on. If the identification is successful, step 44, the system checks whether the characteristics of the merchandise - such as its weight, for example - correspond to the code thereof, step 45. If there is no matching between the weight measured by the bioptical scanning scales and the data stored in the system memory , the system proceeds to step 46, which comprises the interruption of the checkout operation, the activating an alarm, the turning on of the indicator light (34, 34') and so forth. If the above mentioned data match, the weight of the item is added to the weight of the items that have already been processed by the bioptical scales, and this sum total is compared with the weight recorded by the confirmation scales 57, on which the items of merchandise have been placed. If the weights are equivalent, step 47, the item most recently processed is added to the list of purchased merchandise, item 48. If said weights do not match, the system proceeds to step 46, interrupting the operation, activating an alarm and turning on the indicator light (34, 34'). The activation of said alarm may consist of an indication displayed at the central control and supervision facility, the sounding of a buzzer, a message on the loudspeaker, and so forth, or any of these simultaneously. As mentioned before, the user may exclude one or more items from said list of purchased merchandise, by pressing a specific key provided either on the station's panel or as an icon in the touch-screen display.

While the last item has not yet been processed, the flow returns to step 41, otherwise it initiates the payment collection routine, step 50. The checking to determine whether there remain any items not yet processed may be performed automatically using sensing means associated with the merchandise discharge platform 33, or in the absence of such means, by an action of the user, such as by touching a certain icon on the touch screen 21.

After the last item is processed by the system, step 49, the system initiates the payment collection routine, step 50, requesting the customer to select the preferred payment mode by means of the touch screen, step 51. Such payment may be effected by credit or debit card or using currency (currency bills and/or coins placed in the appropriate slots). The payment routine, step 52, may comprise the readout and reception of a password and/or the scanning of the client's signature (as may be the case) or the counting of the currency received and the return of any due change.

Although the present invention has been described in connection with a specific exemplary embodiment thereof, it should be understood that the invention is not limited to said embodiment, and may comprise any equivalent arrangements and modifications introduced thereto. Thus, for example, the merchandise discharge platform or counter may be omitted, such as occurs in the object of patent US 4,676,343, and the items of merchandise may be placed directly on the bioptical scanning scales upon being withdrawn from the cart by the customer.

Furthermore, the checkout process may make provision for the case where one or more items are identified by the hand-held barcode scanner 56. Such will be the case when said items - such as bicycles, tyres, toys and so forth - are too bulky to be placed on the bioptical scanning scales. In such instances, their weight is not added to the sum total of the weights of the individual items.

Therefore, the invention is defined and delimited by the following set of claims.

## Claims

1. A self-service checkout system comprising a counter arrangement comprised by a first (20) and a second (30) self-service checkout stations arranged in parallel to one another, extending individually between a merchandise discharge or check-in zone (33) at one end of each station and a packaging zone (57) at the opposite end thereof, each station comprising a set of bioptical scanning scales (40), a touch screen (21), a printer to print receipts or tickets (55), a keypad (25), and a card reader device (24) as well as coins processing means (28, 29, 36) and currency bills processing means (26, 27, 31, 37),
**characterized in that** said first and second self-service checkout stations are also provided with hand-held barcode scanning devices (56) as well as a no- break power supply,
said stations being separated by a partition (35) that extends along the whole length of the counter arrangement, and
the devices that integrate said counter arrangement being grouped in functional modules comprising a first commercial automation module (63) associated to the first self-checkout station (20), a second commercial automation module (64) associated to the second self-checkout station (30) and a banking automation module (65) shared by both stations,
wherein the control of each said module is performed by a specific independent program.

2. A system, as claimed in claim 1, **characterized in that** said packaging zone of each self-service checkout station comprises a packaging platform or counter (57).

3. A system, as claimed in claims 1 or 2, **characterized in that** said packaging platform or counter (57) is provided with a set of weighing scales.

4. A system, as claimed in claim 1, **characterized in that** said partition (35) is provided with indicator lights (34, 34').

5. A system, as claimed in claim 1, **characterized in that** said self- service checkout stations are connected by data transmission links to a central control and supervision facility.

6. A system, as claimed in claim 1, **characterized in that** said discharge or check-in zone (33) is provided with a presence sensing means to detect the arrival of a user at the self-service checkout counter.

7. A system, as claimed in claim 1, **characterized in that** said discharge or check-in zone is provided with sensing means associated with the merchandise discharge platform or counter (33).

8. A system, as claimed in claim 1, **characterized in that** each self- checkout station (20, 30) is provided with an independent coin recycling device (36).

9. A system, as claimed in claim 1, **characterized in that** said coin processing means comprise one single bidirectional coin recycling means shared by both self-checkout stations.

10. A system, as claimed in claim 1, **characterized in that** said currency bills processing means comprise one single bidirectional currency bills dispensing means (37) shared by both said self-checkout stations (20, 30).

11. A system, as claimed in claim 1, **characterized in that** each of said self-checkout stations (20, 30) is provided with a currency bill validation and authentication device with a respective storage magazine (31) associated with a slot (26) for collection of paper currency.

12. A system, as claimed in claim 1, **characterized in that** each of said specific independent programs, individually associated to the respective commercial automation module (63, 54) or banking automation module (65) is resident in an independent CPU (59, 59', 39).

13. A system, as claimed in claim 1, **characterized in that** said keypad (25) is associated with means for scanning the customer's signature.

14. A control method to control an automated self-service checkout station comprising a commercial automation module (63, 64) associated to each said self-service checkout station, comprising a set of bioptical scanning scales (40), a hand-held barcode scanner (56), a video display monitor (21), at least one card reading device (24), a keypad (25), a printer (55), an indicator light (43, 43') and a packaging platform or counter (57) equipped with a set of scales,
**characterized in that**
the method comprises the identification of every item of merchandise (41) by reading its respective identification code,
checking the authenticity thereof by comparing said identification code with a characteristic of said item of merchandise stored in a memory means (45), comparing the weights of the items of merchandise placed on the scales of the packaging platform or counter with the sum total of the weights of the items already identified (47), and
incorporating the latest identified item to a list of purchased merchandise items and displaying on the video monitor the information relative to the identified item as well as the total value of the already identified items of merchandise (48).

15. A method, as claimed in claim 14, **characterized in that** said identification of each item of merchandise is performed by scanning (41) a barcode attached to said item of merchandise.

16. A method, as claimed in claim 15, **characterized in that** said scanning (41) is performed by a set of bioptical scanning scales (40).

17. A method as claimed in claim 15, **characterized in that** said scanning (41) is performed by a hand-held barcode scanner (56).

18. A method, as claimed in claim 14, **characterized in that** said authenticity check (45) is performed by comparing said item's weight as weighted by the bioptical scanning scales (40) with the weight stored in the memory means corresponding to the barcode of said item of merchandise.

19. A method, as claimed in claim 18, **characterized in that** the mismatch between said weights causes the interruption of the checkout operation as well as the activation of an alarm.

20. A method, as claimed in claim 18, **characterized in that** if the weight of any item is not registered in the item's weight, the weight will be stored therein for future purposes.

21. A method, as claimed in claims 14 or 19, **characterized in that** the indicator light (34, 34') is turned on when an alarm is activated.

22. A method, as claimed in claim 14, **characterized in that** the exclusion of one or more items displayed on the list of purchased merchandise is provided by pressing a specific key by the user.

23. A method, as claimed in claim 17, **characterized in that** the weight of any item identified by means of said hand-held barcode scanner is not compared with the item's weight stored in said memory means.

## Patentansprüche

1. Selbstbedienungsbezahlsystem, umfassend eine Kassenanordnung, die eine erste (20) und eine zweite (30) Selbstbedienungsbezahlstation umfasst, die parallel zueinander angeordnet sind und sich jeweils zwischen einer Warenausgabe- oder Eingangszone (33) bei einem Ende einer jeden Station und einer Verpackungszone (57) bei deren gegenüberliegendem Ende erstrecken, wobei jede Station einen Satz von bioptischen Abtastwaagen (40), einen berührungsempfindlichen Bildschirm (21), einen Drucker zum Drucken von Belegen oder Tickets (55), ein Tastenfeld (25) und eine Kartenleseeinrichtung (24) sowie eine Münzverarbeitungseinrichtung (28, 29, 36) und eine Geldscheinverarbeitungseinrichtung (26, 27, 31, 37) umfasst,
**dadurch gekennzeichnet, dass** die erste und die zweite Selbstbedienungsbezahlstation ferner mit tragbaren Barcodeabtasteinrichtungen (56) sowie einer ausfallsicheren Stromversorgung versehen sind,
die Stationen durch eine Unterteilung (35) getrennt sind, die sich über die gesamte Länge der Kassenanordnung erstreckt, und
die Einrichtungen, die die Kassenanordnung integrieren, in Funktionsmodule gruppiert sind, die ein erstes kommerzielles Automatisierungsmodul (63), das mit der ersten Selbstbezahlstation (20) assoziiert ist, ein zweites kommerzielles Automatisierungsmodul (64), das mit der zweiten Selbstbezahlstation (30) assoziiert ist, und ein Banking-Automatisierungsmodul (65) umfassen, das von beiden Stationen gemeinsam verwendet wird,
wobei die Steuerung von jedem Modul durch ein spezifisches unabhängiges Programm durchgeführt wird.

2. System gemäß Anspruch 1, **dadurch gekennzeichnet, dass** die Verpackungszone einer jeden Selbstbedienungsbezahlstation eine Verpackungsplattform oder einen Verpackungsschalter (57) umfasst.

3. System gemäß Anspruch 1 oder 2, **dadurch gekennzeichnet, dass** die Verpackungsplattform oder der Verpackungsschalter (57) mit einem Satz von Wägewaagen versehen ist.

4. System gemäß Anspruch 1, **dadurch gekennzeichnet, dass** die Unterteilung (35) mit Anzeigelichtern (34, 34') versehen ist.

5. System gemäß Anspruch 1, **dadurch gekennzeichnet, dass** die Selbstbedienungsbezahlstationen durch Datenübertragungsanbindungen mit einer zentralen Steuer- und Überwachungseinrichtung verbunden sind.

6. System gemäß Anspruch 1, **dadurch gekennzeichnet, dass** die Ausgabe- oder Eingangszone (33) mit einer Präsenzerfassungseinrichtung versehen ist, um die Ankunft eines Benutzers an dem Selbstbedienungsbezahlschalter zu erfassen.

7. System gemäß Anspruch 1, **dadurch gekennzeichnet, dass** die Ausgabe- oder Eingangszone mit einer Erfassungseinrichtung versehen ist, die mit der Warenausausgabeplattform oder dem Warenausgabeschalter (33) assoziiert ist.

8. System gemäß Anspruch 1, **dadurch gekennzeichnet, dass** jede Selbstbezahlstation (20, 30) mit einer unabhängigen Münzwiederverwendungseinrichtung (36) versehen ist.

9. System gemäß Anspruch 1, **dadurch gekennzeichnet, dass** die Münzverarbeitungseinrichtungen eine einzelne bidirektionale Münzwiederverwendungseinrichtung umfassen, die durch beide Selbstbezahlstationen gemeinsam verwendet wird.

10. System gemäß Anspruch 1, **dadurch gekennzeichnet, dass** die Geldscheinverarbeitungseinrichtungen eine einzelne bidirektionale Geldscheinausgabeeinrichtung (37) umfassen, die durch beide Selbstbezahlstationen (20, 30) gemeinsam verwendet wird.

11. System gemäß Anspruch 1, **dadurch gekennzeichnet, dass** jede der Selbstbezahlstationen (20, 30) mit einer Geldscheinvalidierungs- und Authentifizierungseinrichtung mit einem jeweiligen Speichermagazin (31) versehen ist, das mit einem Schlitz (26) zum Einziehen von Papiergeld assoziiert ist.

12. System gemäß Anspruch 1, **dadurch gekennzeichnet, dass** jedes der spezifischen unabhängigen Programme, das jeweils mit dem jeweiligen kommerziellen Automatisierungsmodul (63, 54) oder Banking-Automatisierungsmodul (65) assoziiert ist, in einer unabhängigen CPU (59, 59', 39) resident ist.

13. System gemäß Anspruch 1, **dadurch gekennzeichnet, dass** das Tastenfeld (25) mit einer Einrichtung zum Abtasten der Unterschrift des Kunden assoziiert ist.

14. Steuerverfahren zum Steuern einer automatisierten Selbstbedienungsbezahlstation, die ein kommerzielles Automatisierungsmodul (63, 64) umfasst, das mit jeder Selbstbedienungsbezahlstation assoziiert ist, die einen Satz von bioptischen Abtastwaagen (40), einen tragbaren Barcodescanner (56), einen Videoanzeigemonitor (21), zumindest eine Kartenleseeinrichtung (24), ein Tastenfeld (25), einen Drucker (55), ein Indikatorlicht (43, 43') und eine Verpackungsplattform oder einen Verpackungsschalter (57) umfassen, die oder der mit einem Satz von Waagen ausgestattet ist,
**dadurch gekennzeichnet, dass**
das Verfahren die Identifikation einer jeden Ware (41) durch Lesen von deren jeweiligem Identifikationscode umfasst,
Prüfen von deren Authentizität durch Vergleichen des Identifikationscodes mit einer Eigenschaft der Ware, die in einer Speichereinrichtung (45) gespeichert ist,
Vergleichen der Gewichte der Waren, die auf den Waagen der/des Verpackungsplattform oder -schalters platziert sind, mit der Gesamtsumme der Gewichte der bereits identifizierten Waren (47), und
Einarbeiten der jüngsten identifizierten Ware in eine Liste von erworbenen Waren und Anzeigen, auf dem Videomonitor, der Informationen in Relation zu der identifizierten Ware sowie des Gesamtwerts der bereits identifizierten Waren (48).

15. Verfahren gemäß Anspruch 14, **dadurch gekennzeichnet, dass** die Identifikation einer jeden Ware durch Abtasten (41) eines Barcodes durchgeführt wird, der an die Ware angefügt ist.

16. Verfahren gemäß Anspruch 15, **dadurch gekennzeichnet, dass** das Abtasten (41) durch einen Satz von bioptischen Abtastwaagen (40) durchgeführt wird.

17. Verfahren gemäß Anspruch 15, **dadurch gekennzeichnet, dass** das Abtasten (41) durch einen tragbaren Barcodescanner (56) durchgeführt wird.

18. Verfahren gemäß Anspruch 14, **dadurch gekennzeichnet, dass** die Authentizitätsprüfung (45) durch Vergleichen des Warengewichts, wie durch die bioptischen Abtastwaagen (40) gewogen, mit dem in der Speichereinrichtung gespeicherten Gewicht entsprechend dem Barcode der Ware durchgeführt wird.

19. Verfahren gemäß Anspruch 18, **dadurch gekennzeichnet, dass** die fehlende Übereinstimmung zwischen den Gewichten die Unterbrechung des Bezahlvorgangs sowie die Aktivierung eines Alarms verursacht.

20. Verfahren gemäß Anspruch 18, **dadurch gekennzeichnet, dass** falls das Gewicht irgendeiner Ware nicht in dem Warengewicht registriert ist, das Gewicht darin für zukünftige Zwecke gespeichert wird.

21. Verfahren gemäß Anspruch 14 oder 19, **dadurch gekennzeichnet, dass** die Indikatorlampe (34, 34') eingeschaltet wird, wenn ein Alarm aktiviert wird.

22. Verfahren gemäß Anspruch 14, **dadurch gekennzeichnet, dass** der Ausschluss von einer oder mehreren Waren, die auf der Liste von erworbenen Waren angezeigt werden, durch Drücken einer spezifischen Taste durch den Benutzer vorgesehen wird.

23. Verfahren gemäß Anspruch 17, **dadurch gekennzeichnet, dass** das Gewicht irgendeiner Ware, die mittels des tragbaren Barcodescanners identifiziert ist, nicht mit dem Warengewicht verglichen wird, das in der Speichereinrichtung gespeichert ist.

## Revendications

1. Système de paiement en libre service comprenant un agencement de comptoir composé d'un premier (20) et d'un deuxième (30) points de paiement en libre service agencés parallèlement l'un à l'autre, s'étendant individuellement entre une zone de décharge ou d'arrivée de marchandises (33) à une extrémité de chaque point de paiement et une zone d'emballage (57) à l'extrémité opposée de celui-ci, chaque point de paiement comprenant un ensemble de balances à balayage bioptique (40), un écran tactile (21), une imprimante pour imprimer des reçus ou des tickets (55), un clavier (25), et un dispositif de lecture de cartes (24) ainsi qu'un moyen de traitement de pièces de monnaie (28, 29, 36) et un moyen de traitement de billets de banque (26, 27, 31, 37),
**caractérisé en ce que** lesdits premier et deuxième points de paiement en libre service sont également prévus avec des dispositifs portatifs de lecture de codes barres (56) ainsi qu'une alimentation électrique sans interruption,
lesdits points de paiement étant séparés par une cloison (35) qui s'étend sur toute la longueur de l'agencement de comptoir, et
les dispositifs qui intègrent ledit agencement de comptoir étant regroupés en modules fonctionnels comprenant un premier module d'automatisation commercial (63) associé au premier point de paiement en libre service (20), un deuxième module d'automatisation commercial (64) associé au deuxième point de paiement en libre service (30), et un module d'automatisation bancaire (65) partagé par les deux points de paiement,
dans lequel la commande de chaque module est exécuté par un programme indépendant spécifique.

2. Système selon la revendication 1, **caractérisé en ce que** ladite zone d'emballage de chaque point de paiement en libre service comprend une plate-forme ou un comptoir d'emballage (57).

3. Système selon la revendication 1 ou 2, **caractérisé en ce que** ladite plate-forme ou ledit comptoir d'emballage (57) est prévu(e) avec un ensemble de balances de pesée.

4. Système selon la revendication 1, **caractérisé en ce que** ladite cloison (35) est prévue avec des lumières d'indication (34, 34').

5. Système selon la revendication 1, **caractérisé en ce que** lesdits points de paiement en libre service sont connectés par des liaisons de transmission de données à une installation centrale de commande et de supervision.

6. Système selon la revendication 1, **caractérisé en ce que** ladite zone de décharge ou d'arrivée (33) est prévue avec un moyen de détection de présence pour détecter l'arrivée d'un utilisateur au comptoir de paiement en libre service.

7. Système selon la revendication 1, **caractérisé en ce que** ladite zone de décharge ou d'arrivée est prévue avec un moyen de détection associé avec la plate-forme ou le comptoir de décharge de marchandises (33).

8. Système selon la revendication 1, **caractérisé en ce que** chaque point de paiement en libre service (20, 30) est prévu avec un dispositif indépendant de recyclage de pièces de monnaie.

9. Système selon la revendication 1, **caractérisé en ce que** ledit moyen de traitement de pièces de monnaie comprend un moyen de recyclage de pièces de monnaie bidirectionnel unique partagé par les deux points de paiement en libre service.

10. Système selon la revendication 1, **caractérisé en ce que** ledit moyen de traitement de billets de banque comprend un moyen de distribution de billets de banque bidirectionnel unique (37) partagé par lesdits deux points de paiement en libre service (20, 30).

11. Système selon la revendication 1, **caractérisé en ce que** chacun desdits points de paiement en libre service (20, 30) est prévu avec un dispositif de validation et d'authentification de billets de banque avec un magasin de stockage (31) respectif associé avec une fente (26) pour collecte de monnaie papier.

12. Système selon la revendication 1, **caractérisé en ce que** chacun desdits programmes indépendants spécifiques, individuellement associé au module d'automatisation commercial (63, 54) ou au module d'automatisation bancaire (65) respectif, est résident dans une UC (59, 59', 39) indépendante.

13. Système selon la revendication 1, **caractérisé en ce que** ledit clavier (25) est associé avec un moyen de balayage de la signature du client.

14. Procédé de commande pour commander un point de paiement en libre service automatisé comprenant un module d'automatisation commercial (63, 64) associé à chaque dit point de paiement en libre service, comprenant un ensemble de balances à balayage bioptique (40), un lecteur de codes barres portatif (56), un moniteur d'affichage vidéo (21), au moins un dispositif de lecture de cartes (24), un clavier (25), une imprimante (55), une lumière d'indication (43, 43') et une plate-forme ou un comptoir d'emballage (57) équipé(e) avec un ensemble de balances,
**caractérisé en ce que**
le procédé comprend l'identification de chaque article de marchandise (41) par lecture de son code d'identification respectif,
le contrôle de l'authenticité de celui-ci par comparaison dudit code d'identification avec une caractéristique dudit article de marchandise stockée dans un moyen de mémoire (45),
la comparaison des poids des articles de marchandise placés sur les balances de la plate-forme ou du comptoir d'emballage avec la somme totale des poids des articles déjà identifiés (47), et
l'incorporation du dernier article identifié à une liste d'articles de marchandise achetés et l'affichage sur le moniteur vidéo de l'information relative à l'article identifié ainsi que de la valeur totale des articles de marchandise déjà identifiés (48).

15. Procédé selon la revendication 14, **caractérisé en ce que** l'identification de chaque article de marchandise est effectuée par balayage (41) d'un code barres attaché audit article de marchandise.

16. Procédé selon la revendication 15, **caractérisé en ce que** ledit balayage (41) est effectué par un ensemble de balances à balayage bioptique (40).

17. Procédé selon la revendication 15, **caractérisé en ce que** ledit balayage (41) est effectué par un lecteur portatif de codes barres (56).

18. Procédé selon la revendication 14, **caractérisé en ce que** ledit contrôle d'authenticité (45) est effectué en comparant le poids dudit article comme pesé par les balances à balayage bioptique (40) avec le poids stocké dans le moyen de mémoire correspondant au code barres dudit article de marchandise.

19. Procédé selon la revendication 18, **caractérisé en ce que** la non correspondance entre lesdits poids cause l'interruption de l'opération de paiement ainsi que l'activation d'une alarme.

20. Procédé selon la revendication 18, **caractérisé en ce que**, si le poids d'un article quelconque n'est pas enregistré dans le poids de l'article, le poids sera stocké dans celui-ci à des fins futures.

21. Procédé selon la revendication 14 ou 19, **caractérisé en ce que** la lumière d'indication (34, 34') est allumée lorsqu'une alarme est activée.

22. Procédé selon la revendication 14, **caractérisé en ce que** l'exclusion d'un ou de plusieurs articles affichés sur la liste de marchandises achetées est prévue par pression sur une touche spécifique par l'utilisateur.

23. Procédé selon la revendication 17, **caractérisé en ce que** le poids d'un article quelconque identifié au moyen dudit lecteur portatif de codes barres n'est pas comparé avec le poids de l'article stocké dans ledit moyen de mémoire.
